# EUROPÄISCHE PATENTSCHRIFT

(11) **EP 2 079 151 B1**
(45) Veröffentlichungstag und Bekanntmachung des Hinweises auf die Patenterteilung: **28.07.2010**
(21) Anmeldenummer: 08020488.6
(22) Anmeldetag: 26.11.2008
(51) Int. Cl.: H02K 5/124

(54) **Verfahren zum Betreiben eines elektrischen Generators für die Stromgewinnung in Kraftwerken**
Method of operating an electric generator to generate electricity in power plants
Procédé destiné au fonctionnement d'un générateur électrique pour la production d'énergie dans des centrales

(30) Priorität: 07.12.2007 DE 102007059147
(43) Veröffentlichungstag der Anmeldung: 15.07.2009
(73) Patentinhaber: Sensoplan Aktiengesellschaft, 79801 Hohentengen (DE)
(72) Erfinder: Schubert, Johann, 5506 Maegenwil (CH)
(74) Vertreter: Goy, Wolfgang

(56) Entgegenhaltungen:
- EP-A- 1 103 746
- WO-A-94/10740
- DE-A1- 3 723 729
- JP-A- 56 166 742
- JP-A- 59 021 251
- US-A- 2 636 754
- US-A- 4 969 796

## Beschreibung

Die Erfindung betrifft ein Verfahren zum Betreiben eines elektrischen Generators für die Stromgewinnung in Kraftwerken nach dem Oberbegriff des Anspruchs 1.

Die durch Energieumsetzung im elektrischen Generator für die Stromgewinnung in Kraftwerken in Form von Wärme entstehenden Verluste müssen durch ein geeignetes Kühlmedium abgeführt werden. Für größere Generator-Einheitsleistungen wird als Kühlmedium Wasserstoff verwendet. Dieser zirkuliert unter einem gewissen Überdruck gegenüber der Umgebung in einem druckfesten Gehäuse und mit im Gehäuse eingebauten Rückkühlern mit Hilfe von Ventilatoren in einem oder mehreren Kühlungskreisläufen.

Dabei muß das unter Überdruck stehende Generatorgehäuse an allen notwendigen Durchführungen aus dem Innern des Generators nach außen gegen eine Leckage des Wasserstoffs abgedichtet werden. Der Abdichtung der Wellendurchführungen an den Stirnseiten des Gehäuses wird dabei besondere Sorgfalt gewidmet. Die Dichtheit wird auf beiden Seiten des Generators (Turbinenseite und Erregerseite) durch je einen axial mit Öl durchströmten engen Radialspalt zwischen der Rotorwelle und dem nicht rotierenden Dichtring dadurch gewährleistet, daß der Öldruck im Dichtspalt größer als der Wasserstoffdruck im Gehäuse eingestellt wird. Dieses Grundkonzept einer Wellendichtung erfordert einerseits eine geeignete konstruktive Ausbildung der Dichtung an der Welle selbst und andererseits eine geeignete Ölversorgungseinrichtung. Diese ist meist unterhalb des Generators angeordnet und enthält entsprechende Komponenten wie Pumpen, Rückkühler, Filter, Ölzuführungs- und Ölabführungsrohrleitungen sowie Regeleinrichtungen etc.

Die Grundanforderungen an die Wellendichtung von der Betreiberseite her sind niedriger Wasserstoffverbrauch sowie kontinuierlich hohe Wasserstoffreinheit in allen Betriebszuständen. Darüber hinaus werden vom Betreiber eine einfache Bedienbarkeit sowie eine zuverlässige Funktion selbst in langen Betriebsphasen zwischen zwei Revisionsintervallen verlangt. Der Wasserstoffverbrauch verlangt dabei eine Bereitstellung von frischem Wasserstoff mit einer Reinheit von 100%. Denn die Verringerung der Wasserstoffreinheit führt zu einer Erhöhung der Ventilations- und Gasreibungsverluste, welche beide der Gemischdichte proportional sind. Mit zunehmendem Luftanteil wird aber die Gemischdichte vergrößert.

Es gibt verschiedene Wellendichtungstypen, nämlich die Einkreislauf-Wellendichtung, die Zweikreislauf-Wellendichtung sowie die Dreikreislauf-Wellendichtung. Die vorliegende Erfindung geht von der Zweikreislauf-Wellendichtung aus.

Diese Zweikreislauf-Wellendichtung arbeitet mit zwei voneinander unabhängigen Ölkreisläufen, nämlich einem "Luftöl-Kreislauf' und einem "Gasöl-Kreislauf'. Unter "Luftöl" ist dabei im nachfolgenden zu verstehen, daß das Öl dieses Kreislaufs mit Luft angereichert ist, während beim "Gasöl" das Öl mit dem Gas, nämlich Wasserstoff angereichert ist. Diese Gase sind jeweils in dem Öl gelöst.

Die beiden mit Luftöl und Gasöl durchströmten radialen Dichtspalte sind durch einen sogenannten Trennspalt mit sehr kleinem Druckgradienten voneinander separiert. Dieser Trennspalt ist der Zwischenbereich zwischen der zunächst radialen und dann axialen Strömung des Luftöls und des Gasöls, wobei die beiden Strömungsrichtungen im radialen Dichtspalt um 180° entgegengesetzt gerichtet sind. Die Druckgleichheit auf beiden Seiten des Trennspaltes wird unter Berücksichtigung der Regeltoteranz durch ein Druckausgleichsregelventil erzwungen.

Da der Luftöl-Kreislauf mit gelöster Luft und der Gasöl-Kreislauf mit gelöstem Wasserstoff im Bereich der radialen Dichtspalte an der Welle gesättigt sind, wird bei einer Durchströmung des Trennspaltes mit Luftöl der Wasserstoff im Generator durch Luft direkt kontaminiert und somit seine Reinheit verringert. Zusätzlich entsteht auch ein Verlust an Wasserstoff, da der zunehmend durch Luftöl aufgefüllte Gasöl-Kreislauf auf sein ursprüngliches Ölvolumen durch Ableiten des überschüssigen Gasöls in den Luftöltank zurückgeführt werden muß. Umgekehrt muß bei einer Durchströmung des Trennspaltes mit Gasöl wegen zunehmender Entleerung des Gasölkreises dieser mit Luftöl wieder aufgefüllt werden. Diese Durchströmung des Trennspaltes ist sowohl mit einem direkten Verlust an Wasserstoff als auch indirekt mit einer Verringerung der Reinheit des Wasserstoffs verbunden.

Somit führt die Durchströmung des Trennspaltes mit welchem der beiden gesättigten Öle auch immer stets zu einem Wasserstoffverlust und zu einer Verringerung der Wasserstoffreinheit. Dies ist mit einer Erhöhung der Ventilations- sowie Gasreibungsverluste verbunden.

Ein weiterer Nachteil dieses Dichtungstyps ist die Sensitivität des Trennspalts gegenüber Verunreinigungen des Öls. Feststoffpartikel können im Trennspalt viele Male umlaufen, bevor sie den Trennspalt verlassen. Dadurch ist ein Potential für Beschädigungen der Ringlauffläche und der Welle verbunden.

Der grundlegende Unterschied der Zweikreislauf-Wellendichtung zu den beiden anderen genannten Wellendichtungstypen ist, daß diese Zweikreislauf-Wellendichtung ohne entgastes Öl arbeitet. Das mit Luft gesättigte Öl und das mit Wasserstoff gesättigte Öl sind nur durch einen Trennspalt mit relativ geringer Druckdifferenz voneinander getrennt. Der Druckgradient kann sich aus der Toleranz der Regeleinrichtung allein ergeben, so daß abwechselnd Luftöl auf die Gasseite und Gasöl auf die Luftseite strömt. Außerdem kann der Druckgradient mit Absicht in einer bevorzugten Richtung (jedoch so klein wie möglich) gewählt werden, d. h. durch Verwendung von Differenzdruckreglern mit kleinstmöglichem Sollwertbereich.

Beide vorgenannte Einstellungen beeinflussen den Wasserstoffverlust und über die zeitlich zunehmende Verringerung der Reinheit indirekt den Wasserstoffverbrauch, weil die hohe Ausgangsreinheit wegen Minimierung der Ventilations- und Gasreibungsverluste durch Zuführung von Wasserstofffrischgas mit einer Reinheit von 100% wieder hergestellt werden muß. Da der Gaszustand (Druck und Temperatur) im Generator konstant bleiben soll, muß ein dem Frischgasstrom adäquater Gaststrom den Generator verlassen. Diese Bedingung führt zu einem zeitlich transienten Anstieg der Wasserstoffreinheit, der sich mit abnehmender Differenz zur Ausgangsreinheit (z. B. Ausgangsreinheit 99%) durch einen zunehmenden Frischgasverbrauch ausdrückt. Der weitaus größte Anteil des Wasserstoffverbrauchs ist daher mit der Verringerung der Wasserstoffreinheit verbunden.

Die Verringerung der Wasserstoffreiheit ist somit für die Erhöhung der Ventilation- und Gasreibungsverluste und für den weitaus größten Teil am Wasserstoffverbrauch verantwortlich.

Der Wasserstoffverbrauch einer Zweikreislauf-Dichtölanlage setzt sich also zusammen aus einem direkten Wasserstoffverlust, der dann entsteht, wenn Gasöl durch den Trennspalt auf die Luftseite strömt und dadurch der im Öl gelöste Wasserstoff verloren geht. Weiterhin besteht ein indirekter Wasserstoffverbrauch, der dadurch entsteht, daß das auf die Luftseite abgeströmte Gasöl ersetzt werden muß, um die gasseitigen Rücklaufleitungen bzw. die beiden Zweikreislauf-Anlagen üblichen Rücklaufreservoirs aufzufüllen. Das Auffüllen kann aber nur mit Luföl erfolgen. Dadurch aber wird die Wasserstoffreinheit verschlechtert. Um diese, wegen Beschränkung der Ventilations- und Gasreibungsverluste auf einem gewünschten, möglichst hohen Niveau zu halten, muß der mit Luft kontaminierte Wasserstoff durch reinen Wasserstoff, also Frischgas, ersetzt werden. Schließlich existiert noch ein indirekter Wasserstoffverbrauch, der dadurch entsteht, daß Luftöl auf die Gasseite strömt (axial im Trennspalt und radial im Spalt zwischen Dichtring und Gehäusewand) und damit die Wasserstoffreinheit im Generatorgehäuse direkt verringert. Auch hier muß reines Frischgas zugeführt werden, um die gewünschte Wasserstoffreinheit aufrechtzuerhalten. Hinzu kommt, daß das mit Luftöl aufgefüllte Gasöl in den Rücklaufreservoirs abgesteuert werden muß, um das ursprüngliche Niveau wieder herzustellen. Das überschüssige Gasöl kann aber nur in das Luftöl abgeführt werden. Dadurch geht der im Öl gelöste Wasserstoff direkt verloren.

Die Wasserstoffreinheit wird somit unabhängig von der Durchströmungsrichtung des Trennspaltes bei gleichen Druckgradienten über dem Spalt in gleichem Maße verringert.

Ganz problematisch wird der Fall bei einem Ausfall der Gasölpumpe. Hier strömt Luftöl durch den gasseitigen Dichtspalt, wodurch die Reinheit massiv verschlechtert und der Wasserstoffverbrauch durch Frischgaszuführung bis zur Wiederinbetriebnahme der Gasölpumpe massiv erhöht werden muß, um die Reinheit des Wasserstoffs nicht unter einen kritischen Wert absinken zu lassen.

Die EP 1 103 746 A1 zeigt eine Zweikreislauf-Wellendichtung bei einem Generator mit Wasserstoffkühlung. Hierzu ist eine in der Wellendichtung ausgebildete Dichtölzuführung zur Luftseite hin sowie eine Dichtölzuführung zur Gasseite hin vorgesehen.

Die WO 97/10740 A1 zeigt eine Einkreislauf-Wellendichtung für Turbogeneratoren. Das im Öl enthaltene Abgas bestehend aus Wasserstoff sowie Luft wird extrahiert, wobei in einem weiteren Schritt der im Abgas enthaltene Wasserstoff in einer Filteranlage abgetrennt und zu dem Generator zurückgeführt wird. Somit wird der im Abgas anfallende Wasserstoff nicht an die Umgebung abgeleitet sondern weiter im Verfahrenskreislauf genutzt.

Davon ausgehend liegt der Erfindung die Aufgabe zugrunde, eine Zweikreislauf-Rotorwellendichtung für wasserstoffgekühlte Generatoren mit minimalem Wasserstoff-Verbrauch und zeitlich konstanter maximaler Wasserstoffreinheit zu schaffen.

Die technische Lösung ist gekennzeichnet durch die Merkmale im Kennzeichen des Anspruchs 1.

Vorzugsweise wird dabei gemäß der Weiterbildung in Anspruch 2 das Öl einem Vakuum ausgesetzt.

Dadurch ist eine Zweikreislauf-Rotorwellendichtung für wasserstoffgekühlte Turbogeneratoren geschaffen, welche sich durch einen minimalen Verbrauch an Wasserstoff und einer zeitlich konstanten maximalen Reinheit des Wasserstoffs auszeichnet. Der Erfindungsgedanke besteht darin, daß das mit Luft angereicherte Öl (Luftöl) in einem eigens dafür vorgesehenen Tank entgast wird, d. h. daß die im Öl gelöste Luft durch Evakuieren des Tanks dem Öl entzogen wird, bevor das so gereinigte Öl wieder der Dichtung zugeführt wird. Die herkömmlichen Pumpen für das Luftöl bei den aus dem Stand der Technik konventionellen Dichtölanlagen saugen somit nunmehr nicht mehr wie bisher mit Luft angereichertes Öl an, sondern entgastes Öl aus dem Vakuumöltank und befördern es zum selben Dichtspalt, welcher in der konventionellen Dichtölanlage für das Luftöl vorgesehen war. Dies bedeutet aber, daß der Dichtring in seinen Abmessungen und seinen Radialspalten nicht geändert werden muß. Damit wird mit der erfindungsgemäßen Zweikreislauf-Wellendichtungsanlage eine sehr hohe Wasserstoffreinheit in allen Betriebszuständen des Generators stationär aufrechterhalten. Dadurch werden die Ventilations- und Gasreibungsverluste stationär minimiert. Auch bleibt der Wasserstoffverbrauch allein auf den Verlust in Folge Trennspaltströmung auf ein Minimum beschränkt. Für den Fall, daß die Gasölpumpe ausfallen sollte, strömt nunmehr das entgaste Öl anstatt Luftöl durch den gasseitigen Spalt, wodurch die Reinheit nicht verringert wird. Es muß nur ein erhöhter Wasserstoffverbrauch bis zur Wiederinbetriebnahme der Gasölpumpe in Kauf genommen werden.

Ein Ausführungsbeispiel für eine Zweikreislauf-Wellendichtung wird nachfolgend anhand der Zeichnungen beschrieben. In diesen zeigt:
- Fig. 1: eine Zweikreislauf-Wellendichtung mit zwei getrennten Ring- hälften ohne Axialschubausgleich;
- Fig. 2: eine Zweikreislauf-Wellendichtung mit einteiligem Ring sowie mit Axialschubausgleich;
- Fig. 3: ein vereinfachtes Schema der Ölskreisläufe für eine Zweikreis- lauf-Wellendichtung der Fig. 1 und 2.

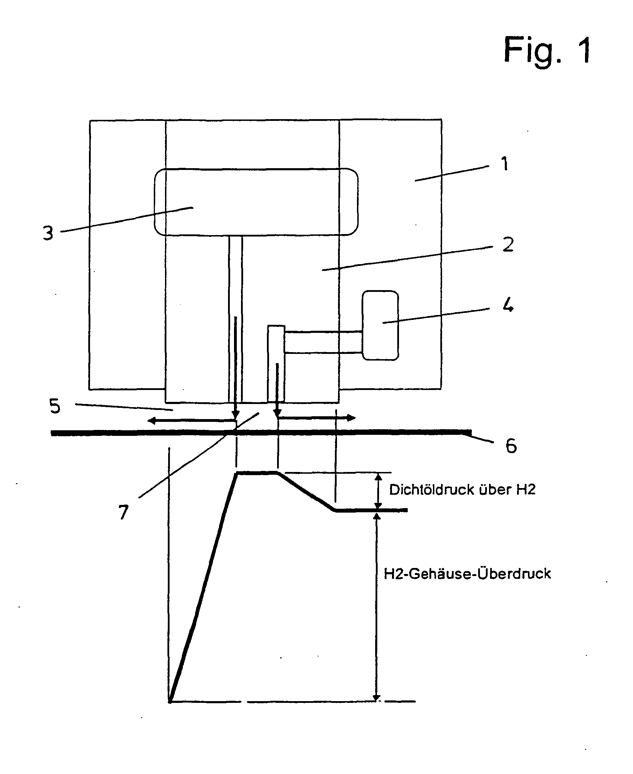

Fig. 1 zeigt eine Zweikreislauf-Wellendichtung einer ersten Ausführungsform. In einem Dichtringgehäuse 1 ist ein Dichtring 2 aus zwei getrennten Ringhälten angeordnet. Die Ringhälften liegen dabei ohne Axialschubausgleich an den zugehörigen Wänden des Dichtringgehäuses 1 an.

Dem Dichtringsystem zugeordnet ist eine Vakuumöl-Zuführung 3 sowie eine GasölZuführung 4. Unter "Vakuumöl" ist dabei zu verstehen, daß das Öl rein ist und in ihm kein Gas, insbesondere Luft gelöst ist. Unter "Gasöl" ist zu verstehen, daß in dem Öl Gas, nämlich Wasserstoff gelöst ist.

Die Vakuumöl-Zuführung 3 erfolgt durch den Radialschlitz zwischen den beiden getrennten Ringhälften des Dichtrings 2. Die Gasölzuführung 4 ist in dem Dichtringgehäuse 1 sowie in der einen Ringhälfte des Dichtrings 2 ausgebildet. Beide Zuführungen 3, 4 münden radial in einem radialen Dichtspalt 5, welcher zwischen der radialen Innenseite des Dichtrings 2 und der radialen Außenseite einer Rotorwelle 6 eines elektrischen Generators für die Stromgewinnung in Kraftwerken ausgebildet ist.

Der feststehende Dichtring 2 ist Teil eines nicht dargestellten Gehäuses des elektrischen Generators, durch welchen hindurch die Rotorwelle 6 drehgelagert geführt ist. Fig. 1 zeigt dabei die eine Durchführung. Das Gehäuse ist mit Wasserstoff gefüllt. Die Fig. 1 zeigt rechts die sogenannte Gasseite (also das Innere des Gehäuses des Generators) und links die sogenannte Luftseite, also die Umgebung des Generators.

Die beiden Mündungen der Zuführungen 3, 4 definieren zwischen sich einen Trennspalt 7.

Die Funktionsweise der Wellendichtung ist wie folgt:

Über die Vakuumöl-Zuführung 3 wird entgastes Öl kontinuierlich zugeführt. Dieses Öl strömt in Richtung Luftseite (in der Zeichnung nach links) und reichert sich dort mit Luft an, d. h. in dem Öl löst sich Luft bis zur Sättigung.

Durch die Gasöl-Zuführung 4 wird Öl zugeführt, in welchem Wasserstoff bis zur Sättigung gelöst ist. Dieses strömt (in der Zeichnung nach rechts) ins Innere des Gehäuses des elektrischen Generators, welches - wie ausgeführt - mit Wasserstoff gefüllt ist.

Der Druckverlauf in Fig. 1 läßt erkennen, daß der Druck des Vakuumöls sowie des Gasöls höher ist als der Überdruck des Wasserstoffs im Gehäuse. Dadurch wird verhindert, daß Wasserstoff durch die Dichtungen hindurch aus dem Gehäuse austreten kann.

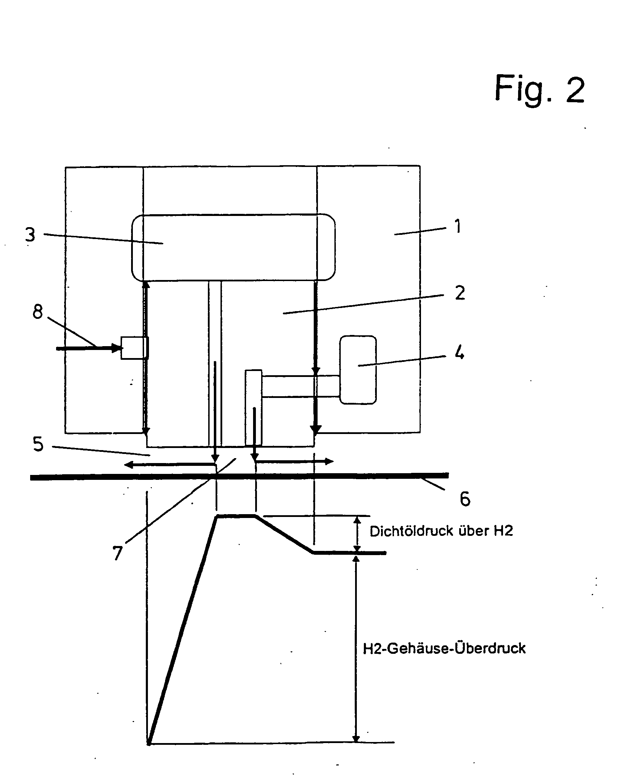

Da die Wellendichtung keinen Axialschubausgleich besitzt (dieser ist in der nachfolgenden Fig. 2 dargestellt), bedeutet dies einen Verzicht auf einen axial hydrodynamisch schwimmenden Ring und stattdessen eine Ausführung von zwei unabhängig voneinander agierenden Ringhälften. Dabei liegen die beiden Ringhälften - wie ausgeführt - an den zugehörigen Gehäusewänden an, wodurch etwaige Kurzschlußströmungen auf der Luftseite sowie der Gasseite vermieden werden. Dadurch wird der Wasserstoff-Verbrauch allein auf die Durchströmung des Trennspalts 7 beschränkt und der Evakuierungsaufwand durch Verringerung des auf die Luftseite abströmenden Öls minimiert.

Die Ausführungsform in Fig. 2 zeigt eine etwas modifizierte Ausführungsform einer Zweikreislauf-Wellendichtung. Hier ist der Dichtring 2 einteilig ausgebildet. Ihm zugeordnet ist ein Axialschubausgleich mittels einer Drucköl-Zuführung 8. Dies bedeutet, daß kein Festkörperkontakt zwischen dem Dichtring 2 und den Wänden des Dichtringgehäuses 1 existiert. Der Dichtring 2 ist somit ein Schwimmring.

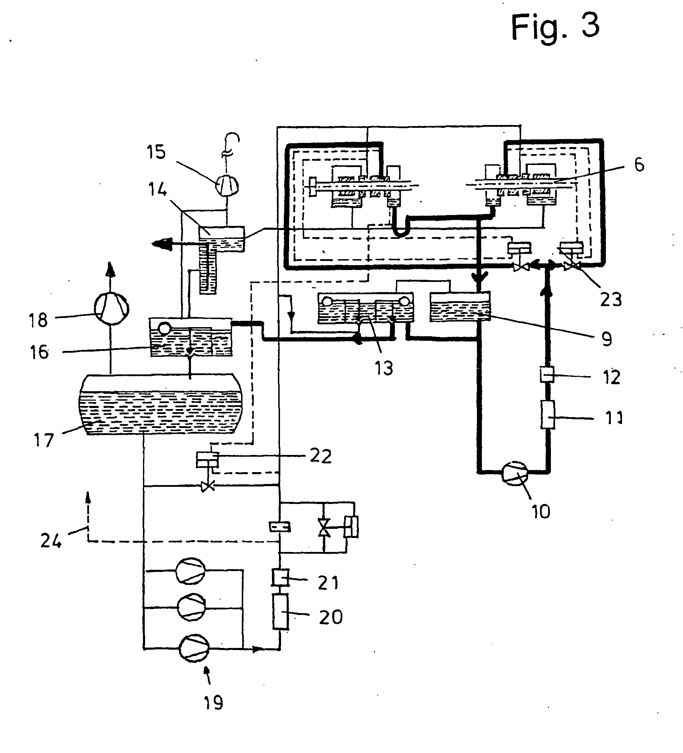

Die Fig. 1 und 2 zeigen somit zwei Ausführungsformen einer Zweikreislauf-Wellendichtung. Fig. 3 zeigt die kompletten Ölkreisläufe.

Das Verfahrensschema zeigt konkret den Luft/Vakuum-Öl-Kreislauf (dünne Linie) sowie den Gas-Öl-Kreislauf (dicke Linie).

Dargestellt sind zunächst in der Zeichnung rechts oben die beiden Wellendichtungen des Gehäuses, wie sie in Fig. 1 dargestellt sind. Wie zuvor beschrieben, münden in diesen Wellendichtungen entgastes (Vakuum-)Öl sowie das mit Wasserstoff gesättigte Gasöl.

Nach Passieren der Wellendichtung wird das Gasöl einem Entschäumungstank 9 zugeführt. Über eine Gasöl-Pumpe 10, einem Gasöl-Kühler 11 und einem Filter 12 erfolgt die Rückleitung des Gasöls zu den beiden Wellendichtungen.

Der Entschäumungstank 9 und ein Gasöl-Rücklaufregel-Behälter 13 bilden ein System von kommunizierenden Gefäßen.

Das entgaste (Vakuum-)Öl reichert sich nach dem Passieren der Wellendichtungen mit Luft an, so daß aus dem Vakuumöl vor der Zuführung zur Wellendichtung ein Luftöl nach Passieren der Wellendichtung wird. Nach Passieren eines Zwischentanks 14 mit einer Öldunstabsaugung 15 wird das Luftöl einem Entschäumungstank 16 zugeführt.

Von dort aus wird das Luftöl über ein schwimmergesteuertes Regelventil einem Vakuumöltank 17 zugeführt. Eine Vakuumpumpe 18 sorgt für eine Evakuierung des Öltanks, so daß die im Öl gelöste Luft ausgast und abgeführt wird. Dies bedeutet, daß in dem Vakuumöltank 17 im Zusammenwirken mit der Vakuumpumpe 18 aus dem Luftöl entgastes Vakuumöl wird.

Über Vakuumölpumpen 19 (mit Luftölpumpen/Wechselstrom sowie Luftölpumpen/Gleichstrom) wird über einen Luftöl-Kühler 20 sowie einem umschaltbaren Doppelfilter 21 das entgaste Vakuumöl wieder der Wellendichtung zugeführt.

Weiterhin weist die Anlage noch einen Differenzdruckregler 22 sowie einen Druckausgleichsregler 23 auf.

Optional kann noch eine Zuleitung 24 für einen Axialschubausgleich vorgesehen sein, wenn es sich bei der Wellendichtung gemäß Fig. 2 um eine Wellendichtung mit Axialschubausgleich handelt.

Der Gasöl-Kreislauf mit der entsprechenden Rücklaufregelung bleibt unangetastet und funktioniert daher wie bei einer Wellendichtung, bei welcher das sogenannte Luftöl nicht entgast wird.

Das Gasöl strömt infolge der Regeltoleranz oder stationär eingestellter Druckdifferenz über dem Trennspalt 7 auf die Luftseite, vermischt sich dort mit dem entgasten Vakuumöl und verläßt mit diesem den luftseitigen Dichtspalt 5. Es entsteht dadurch ein direkter Wasserstoffverlust. Die gasseitigen Rücklaufreservoirs werden soweit entleert, bis das in der Zeichnung linke Schwimmerventil im Gasöl-Rücklaufregel-Behälter 13 öffnet und anstelle des Luftöls nunmehr evakuiertes Öl aus der Vakuumöl-Druckleitung in die Reservoirs einströmt. Dadurch wird die Wasserstoffreinheit aber nicht verschlechtert.

Vakuumöl strömt infolge der Regeltoleranz oder stationär eingestellter Druckdifferenz über dem Trennspalt 7 auf die Gasseite innerhalb des Generatorgehäuses, vermischt sich mit dem Gasöl und verläßt mit diesem den gasseitigen Dichtspalt 5. Eine direkte Verschlechterung der Reinheit tritt dabei nicht ein, weil sich in dem Vakuumöl aufgrund der Entgasung keine Luft befindet. Die gasseitigen Rücklaufreservoirs werden soweit aufgefüllt, bis das rechte Schwimmerventil im Gasöl-Rücklaufregel-Behälter 13 öffnet und das überschüssige Gasöl in die Vakuumöl-Rücklaufleitung (Saugleitung) abgesteuert wird. Es entsteht zwar ein Wasserstoffverlust, die Wasserstoffreinheit bleibt jedoch unverändert.

Somit entstehen für beide Durchströmungs-Richtungen des Trennspalts 7 bei gleichen eingestellten Druckdifferenzen gleiche Wasserstoffverluste. Man kann daher auch bei wechselnder Durchströmungsrichtung infolge der Regeltoleranz mit einem stationären, richtungsunabhängigen Druckgradienten rechnen.

Weiterhin ist ein Ersatz der Backup-Ölzuführung vom Lageröltank durch eine weitere wechselstrombetriebene Dichtölpumpe der Vakuumölpumpen 19 realisiert. Dadurch wir die Zweikreislauf-Dichtölanlage unter Wahrung der Redundanz vom Lageröltank in der Ölzufuhr abgekoppelt und kann somit autonom betrieben werden.

Um das Gefährdungspotential für den Trennspalt 7 durch Verunreinigungen im Öl in Form von Feststoffpartikeln zu verringern und die Ölaufwärmung im Spalt zu verringern, sollte über dem Trennspalt 7 eine geringe stationäre Druckdifferenz eingestellt werden.

### Bezugszeichenliste

- 1: Dichtringgehäuse
- 2: Dichtring
- 3: Vakuumöl-Zuführung
- 4: Gasöl-Zuführung
- 5: Dichtspalt
- 6: Rotorwelle
- 7: Trennspalt
- 8: Drucköl-Zuführung
- 9: Entschäumungstank
- 10: Gasöl-Pumpe
- 11: Gasöl-Kühler
- 12: Filter
- 13: Gasöl-Rücklaufregel-Behälter
- 14: Zwischentank
- 15: Öldunstabsaugung
- 16: Entschäumungstank
- 17: Vakuumöltank
- 18: Vakuumpumpe
- 19: Vakuumölpumpe
- 20: Luftöl-Kühler
- 21: Doppelfilter
- 22: Differenzdruckregler
- 23: Druckausg leichsregler
- 24: Zuleitung

## Patentansprüche

1. Verfahren zum Betreiben eines elektrischen Generators für die Stromgewinnung in Kraftwerken, wobei
der elektrische Generator versehen ist:
- mit einer eine Wicklung aufweisenden Rotorwelle (6),
- mit einem Gehäuse, in welchem die Rotorwelle (6) drehbar gelagert ist, sowie
- mit zwei Dichtringen (2) bei den beiden Durchtrittsstellen der Rotorwelle (6) durch das Gehäuse,
wobei beim Verfahren
das Gehäuse mit Wasserstoff befüllt wird und
dem radialen Dichtspalt (5) zwischen dem jeweiligen Dichtring (2) und der Rotorwelle (6) in einem Zweikreislauf in zwei entgegengesetzt gerichteten Axialströmen unter Belassung eines Trennspaltes (7) dazwischen kontinuierlich Öl für die Abdichtung zugeführt wird, wobei der erste Strom ins Innere des Gehäuses und der zweite Strom bezüglich des Gehäuses nach außen hin gerichtet ist,
**dadurch gekennzeichnet,**
**daß** aus dem Öl des zweiten Stroms die gelöste Luft entfernt wird, bevor das Öl wieder dem Dichtspalt (5) zugeführt wird.

2. Verfahren nach dem vorhergehenden Anspruch,
**dadurch gekennzeichnet,**
**daß** das Öl einem Vakuum ausgesetzt wird.

## Claims

1. Method for operating an electric generator to generate current in power stations, wherein the electric generator is provided:
- with a rotor shaft (6) having a winding,
- with a housing in which the rotor shaft (6) is rotatably mounted, and
- with two sealing rings (2) at the two points where the rotor shaft (6) passes through the housing, wherein, in the method, the housing is filled with hydrogen and oil for the seal is continuously fed to the radial sealing gap (5) between the respective sealing ring (2) and the rotor shaft (6) in a dual circuit in two axial flows in opposite directions leaving a separating gap (7) in between, the first flow being directed into the interior of the housing and the second flow being directed outwardly with respect to the housing, **characterised in that** the released air is removed from the oil of the second flow before the oil is again fed to the sealing gap (5).

2. Method according to the preceding claim, **characterised in that** the oil is subjected to a vacuum.

## Revendications

1. Procédé pour faire fonctionner un générateur électrique pour la production de courant dans des centrales électriques, le générateur électrique étant pourvu :
- d'un arbre rotor (6) présentant un enroulement,
- d'un boîtier dans lequel l'arbre rotor (6) est monté tournant, ainsi que
- de deux bagues d'étanchéité (2) aux deux points de passage de l'arbre rotor (6) à travers le boîtier,
selon lequel procédé
le boîtier est rempli d'hydrogène et
de l'huile est amenée de façon continue pour l'étanchéité à la fente d'étanchéité radiale (5) entre la bague d'étanchéité (2) respective et l'arbre rotor (6) dans un circuit double en deux courants axiaux dirigés en sens contraire en laissant une fente de séparation (7) entre les deux, le premier courant étant dirigé vers l'intérieur du boîtier et le deuxième courant vers l'extérieur par rapport au boîtier,
**caractérisé en ce**
**que** l'air dissous est éliminé du deuxième courant avant que l'huile soit de nouveau amenée à la fente d'étanchéité (5).

2. Procédé selon la revendication précédente,
**caractérisé en ce**
**que** l'huile est exposée à un vide.
